# EUROPÄISCHE PATENTSCHRIFT

(11) **EP 1 725 761 B1**
(45) Veröffentlichungstag und Bekanntmachung des Hinweises auf die Patenterteilung: **07.05.2008**
(21) Anmeldenummer: 05707948.5
(22) Anmeldetag: 04.02.2005
(51) Int. Cl.: F02D 41/38

(54) **VERFAHREN ZUM STEUERN EINER BRENNKRAFTMASCHINE**
METHOD FOR CONTROLLING AN INTERNAL COMBUSTION ENGINE
PROCEDE DE COMMANDE D'UN MOTEUR A COMBUSTION INTERNE

(30) Priorität: 15.03.2004 DE 102004012489
(43) Veröffentlichungstag der Anmeldung: 29.11.2006
(73) Patentinhaber: VDO Automotive AG, 93055 Regensburg (DE)
(72) Erfinder: ACHLEITNER, Erwin, 93083 Obertraubling (DE); CWIELONG, Martin, 93049 Regensburg (DE); ESER, Gerhard, 93155 Hemau (DE)
(86) Internationale Anmeldenummer: PCT/EP2005/050493
(87) Internationale Veröffentlichungsnummer: WO 2005/090769

(56) Entgegenhaltungen:
- DE-A1- 10 214 722
- US-A- 5 727 525
- US-A- 6 065 446
- US-A1- 2003 017 911
- US-A1- 2003 204 302

## Beschreibung

Die Erfindung betrifft ein Verfahren zum Steuern einer Brennkraftmaschine.

Aufgrund immer strengerer gesetzlicher Vorschriften bezüglich Schadstoffemissionen von Brennkraftmaschinen und aufgrund gleichzeitig steigender Kundenwünsche bezüglich eines hohen Fahrkomforts müssen Brennkraftmaschinen in Kraftfahrzeugen immer genauer gesteuert werden. Sensoren, wie beispielsweise Temperatur-, Drehzahl-, Luftmassen- oder Drucksensoren, messen physikalische Betriebsgrößen der Brennkraftmaschine, die von einer Steuereinrichtung verarbeitet werden. Die Steuereinrichtung kann abhängig von gemessenen oder abgeleiteten Betriebsgrößen der Brennkraftmaschine durch Ansteuerung verschiedener Stellglieder, die beispielsweise die Drosselklappe, den Zündzeitpunkt oder die eingespritze Kraftstoffmenge einstellen, Einfluss auf das Betriebsverhalten der Brennkraftmaschine nehmen. Insbesondere das von der Brennkraftmaschine erzeugte Motordrehmoment wird gesteuert. Abhängig von dem Betriebszustand der Brennkraftmaschine, z.B. während der Start- und Warmlaufphase, im Leerlauf oder bei Beschleunigung, und abhängig von zugeschalteten Komfortfunktionen, wie beispielsweise einer Klimaanlage, werden unterschiedliche Anforderungen an das von der Brennkraftmaschine zu liefernde Motordrehmoment gestellt.

US 2003/204302 offenbart ein Verfahren zur Ermittlung des Verlustdrehmoments einer Hochdruckpumpe, die Kraftstoff in einen Kraftstoffspeicher fördert. In US 2003/204302 wird ein Verlustdrehmoment ermittelt abhängig von dem Antriebsdrehmoment der Hochdruckpumpe.

Aus der DE 196 12 455 A1 ist ein Verfahren zum Ermitteln eines Solldrehmoment an der Kupplung eines Kraftfahrzeugs bekannt. Es wird ein minimales und ein maximales Drehmoment abhängig von einem Verlustdrehmoment ermittelt. In Abhängigkeit von einem Pedalwert, der abhängig von dem Fahrpedalwinkel ist, einer Motordrehzahl und eines Stellwerts eines Fahrgeschwindigkeitsreglers wird ein Drehmomentfaktor bestimmt. Ein Solldrehmoment wird mittels des Drehmomentfaktors aus dem durch das minimale und maximale Drehmoment gegebenen Drehmomentbereich ermittelt, der abhängt von einem Verlustdrehmoment. Dieses Solldrehmoment wird abhängig von Vorhaltedrehmomenten, beispielsweise des Leerlaufreglers, einer Funktion zum Katalysatoraufheizen oder zum Begrenzen von Ruckelschwingungen, und dem Verlustdrehmoment korrigiert. Als Ausgangsgröße wird ein Ansteuersignal für einen Drosselklappensteller bestimmt.

Das Solldrehmoment kann umso genauer bestimmt werden, je genauer die einzelnen Verlustdrehmomentanteile ermittelt werden können. Es hat sich gezeigt, dass bei Brennkraftmaschinen, deren Kraftstoffzuführeinrichtung eine Hochdruckpumpe mit Volumenstromsteuerventil aufweist, das ermittelte Verlustdrehmoment ungenau ist.

Die Aufgabe der Erfindung ist, ein Verfahren zu schaffen, das ein präzises Steuern einer Brennkraftmaschine mit einer Hochdruckpumpe in der Kraftstoffzuführeinrichtung ermöglicht.

Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich aus durch ein Verfahren zum Steuern einer Brennkraftmaschine mit einer Kraftstoffzuführeinrichtung, wobei die Kraftstoffzuführeinrichtung einen Niederdruckkreis und eine Hochdruckpumpe, der ein Volumenstromsteuerventil zugeordnet ist, und die eingangsseitig gekoppelt ist mit dem Niederdruckkreis, und die Kraftstoff in einen Kraftstoffspeicher fördert, umfasst. Ein Schätzwert des Antriebsdrehmoments der Hochdruckpumpe wird bestimmt in Abhängigkeit von dem Kraftstoffdruck in dem Kraftstoffspeicher. Ein Verlustdrehmoment wird ermittelt abhängig von dem Schätzwert für das Antriebsdrehmoment der Hochdruckpumpe und weiteren Verlustdrehmomentanteilen, die abhängig sind von einer Motordrehzahl und weiteren Betriebsgrößen. Abhängig von diesem Verlustdrehmoment wird ein Solldrehmoment ermittelt, aus dem mindestens ein Stellsignal zum Ansteuern eines Stellglieds der Brennkraftmaschine erzeugt wird.

Durch das Berücksichtigen des Kraftstoffdrucks in dem Kraftstoffspeicher nimmt auf einfache Weise die Genauigkeit des ermittelten Verlustdrehmoments zu und ermöglicht so, das Motordrehmoment besser auf die jeweilige Betriebssituation einzustellen.

Das Verfahren nutzt die Erkenntnis, dass eine eindeutige Zuordnung des Betriebszustands der Hochdruckpumpe zu deren Antriebsdrehmoment möglich ist. Darüber hinaus nutzt sie die Erkenntnis, dass diese Zuordnung abhängig von dem Kraftstoffdruck in dem Kraftstoffspeicher ist.

In einer vorteilhaften Ausgestaltung der Erfindung wird der Schätzwert des Antriebsdrehmoments der Hochdruckpumpe zusätzlich abhängig von einer den Kraftstoffförderstrom der Hochdruckpumpe charakterisierenden Größe und der Motordrehzahl der Brennkraftmaschine ermittelt. Hierbei wird die Erkenntnis genutzt, dass der über das Volumenstromsteuerventil eingestellte Kraftstoffförderstrom erheblich das Antriebsdrehmoment der Hochdruckpumpe beeinflusst, und dass zusätzlich drehzahlabhängige Reibungsverluste der Hochdruckpumpe auftreten. Durch die Berücksichtigung dieser zusätzlichen Größen wird die Genauigkeit des Schätzwerts für das Antriebsdrehmoment der Hochdruckpumpe weiter verbessert.

In einer weiteren vorteilhaften Ausgestaltung der Erfindung sind zum Einstellen des Kraftstoffdrucks in dem Kraftstoffspeicher das Volumenstromsteuerventil und ein Druckregulator vorgesehen. Der Schätzwert für das Antriebsdrehmoment der Hochdruckpumpe wird abhängig davon ermittelt, ob der Kraftstoffdruck in dem Kraftstoffspeicher aktuell mittels des Volumenstromsteuerventils und/oder des Druckregulators eingestellt wird. Das Verfahren nutzt die Erkenntnis, dass das Antriebsdrehmoment der Hochdruckpumpe sehr stark davon abhängig ist, ob der Kraftstoffdruck im Kraftstoffspeicher über das Volumenstromsteuerventil oder über den Druckregulator eingestellt wird. Dies hat den Vorteil, dass das Antriebsdrehmoment der Hochdruckpumpe in verschiedenen Betriebszuständen der Brennkraftmaschine mit hoher Genauigkeit abgeschätzt werden kann.

Eine weitere vorteilhafte Ausgestaltung der Erfindung zeichnet sich dadurch aus, dass weitere Anteile des Verlustdrehmoments ermittelt werden aus einem Pump- und Reibungsverlustwert, einem Temperaturkorrekturwert und einem Zusatzlastwert. Das so bestimmte Verlustdrehmoment ermöglicht eine genaue Bestimmung des Solldrehmoments.

Ausführungsbeispiele der Erfindung sind im Folgenden anhand der schematischen Zeichnungen erläutert. Es zeigen:
- Figur 1: eine Brennkraftmaschine mit einer Kraftstoffzuführeinrichtung und einer Steuereinrichtung,
- Figur 2: ein Blockschaltbild der Steuereinrichtung zum Bestimmen eines Solldrehmoments, eines Verlustdrehmoments und von Stellgrößen zum Steuern einer Brennkraftmaschine,
- Figur 3: ein detaillierteres Blockschaltbild zum Bestimmen des Verlustdrehmoments,
- Figur 4: ein weiteres Blockschaltbild zum Bestimmen des Antriebsdrehmoments einer Hochdruckpumpe und
- Figur 5: ein weiteres Blockschaltbild zum Bestimmen des Antriebsdrehmoments einer Hochdruckpumpe bei Mengenregelung.

Elemente gleicher Konstruktion und Funktion sind figurenübergreifend mit den gleichen Bezugszeichen versehen.

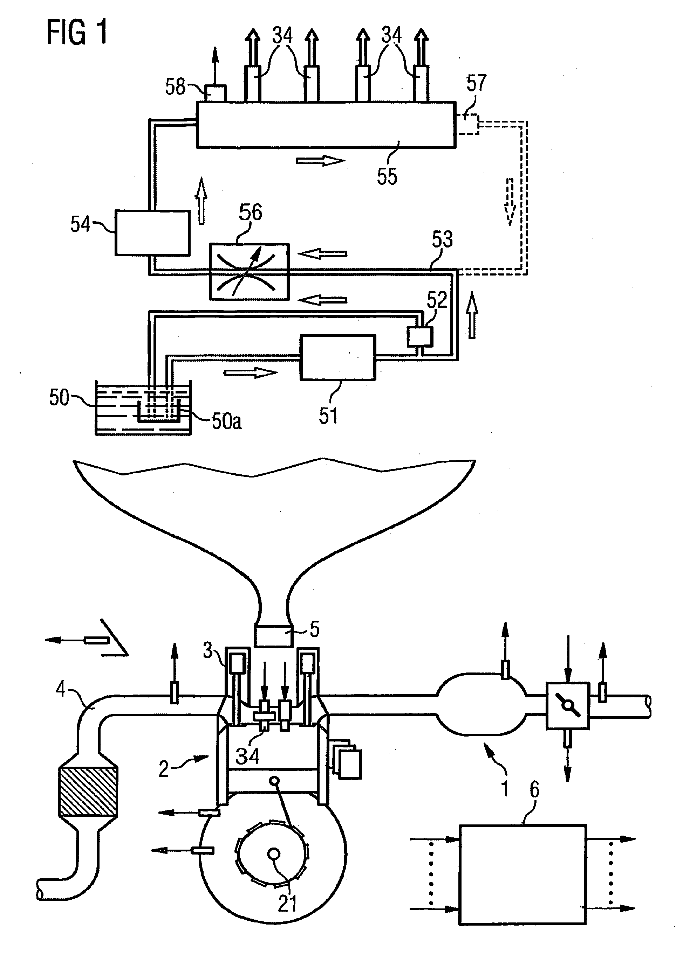

Eine Brennkraftmaschine (Figur 1) umfasst einen Ansaugtrakt 1, einen Motorblock 2, einen Zylinderkopf 3 und einen Abgastrakt 4. Der Motorblock 2 umfasst mehrere Zylinder, welche Kolben und Pleuelstangen haben, über die sie mit einer Kurbelwelle 21 gekoppelt sind.

Der Zylinderkopf 3 umfasst einen Ventiltrieb mit einem Gaseinlassventil, einem Gasauslassventil und Ventilantrieben. Der Zylinderkopf 3 umfasst ferner ein Einspritzventil 34 und eine Zündkerze.

Ferner ist eine Zuführeinrichtung 5 für Kraftstoff vorgesehen. Sie umfasst einen Kraftstofftank 50, der über eine erste Kraftstoffleitung mit einer Niederdruckpumpe 51 verbunden ist. Die Kraftstoffleitung mündet in einen Schwalltopf 50a. Ausgangsseitig ist die Niederdruckpumpe 51 mit einem Zulauf 53 einer Hochdruckpumpe 54 wirkverbunden. Ferner ist auch ausgangsseitig der Niederdruckpumpe 51 ein mechanischer Regulator 52 vorgesehen, welcher ausgangsseitig über eine weitere Kraftstoffleitung mit dem Kraftstofftank 50 verbunden ist.

Die Niederdruckpumpe 51, der mechanische Regulator 52, die Kraftstoffleitung, die weitere Kraftstoffleitung und der Zulauf 53 bilden einen Niederdruckkreis.

Die Niederdruckpumpe 51 ist vorzugsweise so ausgelegt, dass sie während des Betriebs der Brennkraftmaschine immer eine ausreichend hohe Kraftstoffmenge liefert, die gewährleistet, dass ein vorgegebener Niederdruck nicht unterschritten wird.

Der Zulauf 53 ist hin zu der Hochdruckpumpe 54 geführt, welche ausgangsseitig den Kraftstoff hin zu einem Kraftstoffspeicher 55 fördert. Die Hochdruckpumpe 54 wird in der Regel von der Nockenwelle angetrieben und fördert somit bei konstanter Drehzahl N der Kurbelwelle 21 ein konstantes Kraftstoffvolumen in den Kraftstoffspeicher 55.

Die Einspritzventile 34 sind mit dem Kraftstoffspeicher 55 wirkverbunden. Der Kraftstoff wird somit den Einspritzventilen 34 über den Kraftstoffspeicher 55 zugeführt.

In dem Vorlauf der Hochdruckpumpe 54, das heißt stromaufwärts der Hochdruckpumpe 54, ist ein Volumenstromsteuerventil 56 vorgesehen, mittels dessen der Volumenstrom eingestellt werden kann, der der Hochdruckpumpe 54 zugeführt wird. Durch eine entsprechende Ansteuerung des Volumenstromsteuerventils 56 kann sichergestellt werden, dass im Kraftstoffspeicher 55 immer ein gewünschter Kraftstoffdruck P herrscht, der mit einem Kraftstoffdrucksensor 58 gemessen wird, ohne dass ein elektromagnetischer Druckregulator 57 ausgangsseitig des Kraftstoffspeichers 55 mit einer entsprechenden Rückführleitung in den Niederdruckkreis vorgesehen sein muss.

Alternativ kann die Brennkraftmaschine jedoch auch mit einem elektromagnetischen Druckregulator 57 ausgangsseitig des Kräftstoffspeichers 55 und mit einer entsprechenden Rückführleitung in den Niederdruckkreis versehen sein. Alternativ kann auch das Volumenstromsteuerventil 56 in die Hochdruckpumpe 54 integriert sein, oder der Druckregulator 57 kann in das Volumenstromsteuerventil 56 integriert sein.

Ferner ist der Brennkraftmaschine eine Steuereinrichtung 6 zugeordnet, der wiederum Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in entsprechende Stellsignale zum Steuern von Stellgliedern mittels entsprechender Stellantriebe umgesetzt werden.

Die Sensoren sind ein Pedalstellungsgeber, welcher die Stellung eines Fahrpedals erfasst und einen Pedalwert PVS ermittelt, ein Kurbelwellenwinkelsensor, welcher einen Kurbelwellenwinkel erfasst und welchem dann eine Motordrehzahl N zugeordnet wird, ein Luftmassenmesser, welcher den Luftmassenstrom MAF erfasst, der Kraftstoffdrucksensor 58, welcher den Kraftstoffdruck P in dem Kraftstoffspeicher 55 erfasst, ein erster Temperatursensor, welcher die Temperatur der Ansaugluft in dem Ansaugtrakt erfasst, ein zweiter Temperatursensor, der eine Temperatur TCO eines Kühlmittels erfasst, bevorzugt des Kühlwassers, und ein dritter Temperatursensor, der die Temperatur TOIL des Motoröl erfasst. Je nach Ausführungsform der Erfindung kann eine beliebige Untermenge der Sensoren oder auch zusätzliche Sensoren vorhanden sein.

Die Stellglieder sind beispielsweise als Gaseinlass- oder Gasauslassventile, Einspritzventile 34, Zündkerze, Drosselklappe, Niederdruckpumpe 51, Volumenstromsteuerventil 56 oder auch als elektromechanischer Druckregulator 57 ausgebildet.

Bevorzugt hat die Brennkraftmaschine auch weitere Zylinder, denen dann entsprechende Stellglieder zugeordnet sind.

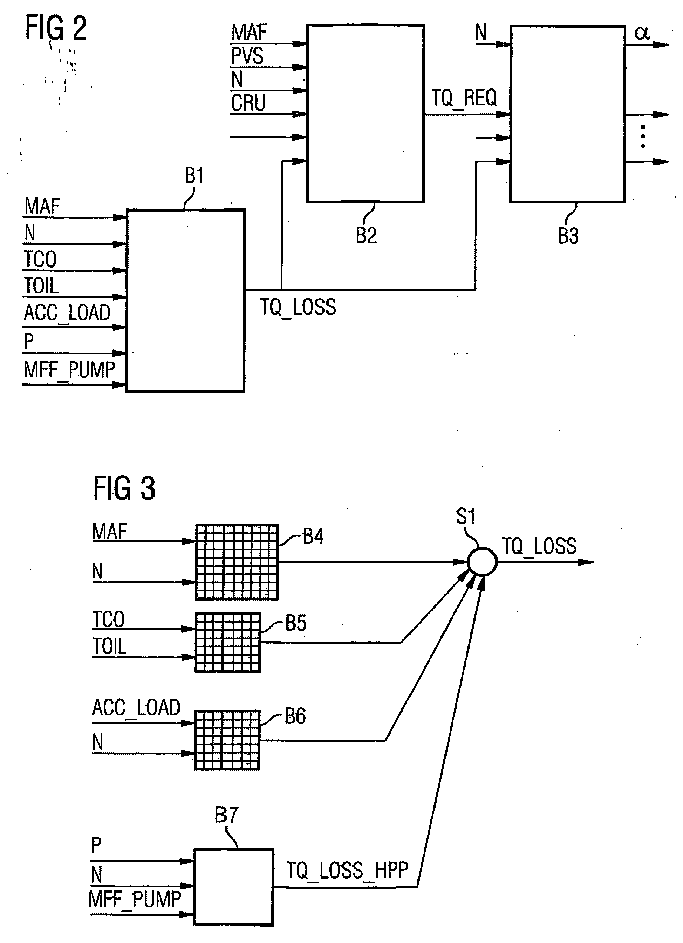

Figur 2 zeigt in einer vereinfachten Darstellung einen Funktionsblock B1, in dem ein Verlustdrehmoment TQ_LOSS ermittelt wird, einen Funktionsblock B2 zur Ermittlung eines Solldrehmoments TQ_REQ und einen Funktionsblock B3, in dem aus den Eingangsgrößen Stellsignale, z.B. ein Öffnungssollwert α für eine Drosselklappe, zur Ansteuerung von Stellgliedern der Brennkraftmaschine, wie z.B. Gaseinlass- oder Gasauslassventile, Einspritzventile 34 und Zündkerzen, bestimmt werden.

Der Funktionsblock B1, in dem das Verlustdrehmoment TQ_LOSS abhängig von dem Luftmassenstrom MAF, der Motordrehzahl N, der Kühlmitteltemperatur TCO, der Motoröltemperatur TOIL, einer Zusatzlast ACC_LOAD, dem Kraftstoffdruck P und einer den Förderstrom der Hochdruckpumpe charakterisierenden Größe MFF_PUMP ermittelt wird, ist weiter unten genauer erläutert. Das ermittelte Verlustdrehmoment TQ_LOSS wird sowohl für Funktionsblock B2 als auch für Funktionsblock B3 als Eingangsgröße verwendet. In B2 wird das Solldrehmoment TQ_REQ abhängig von dem Luftmassenstrom MAF, dem Pedalwert PVS, der Motordrehzahl N, bevorzugt einem Stellwert eines Fahrgeschwindigkeitsreglers CRU und dem Verlustdrehmoment TQ_LOSS bestimmt. In B3 werden die Stellgrößen, wie z.B. der Öffnungssollwinkel α der Drosselklappe, unter anderem aus der Motordrehzahl N, dem Solldrehmoment TQ_REQ und dem Verlustdrehmoment TQ_LOSS ermittelt.

In Figur 3 ist der Funktionsblock B1 aus der Figur 2 ausführlicher dargestellt. In einem Funktionsblock B4 wird ein die Pump- und Reibungsverluste, die durch die Bewegung des Kolbens im Zylinder entstehen, repräsentierender Wert aus dem Luftmassenstrom MAF und der Motordrehzahl N ermittelt. In einem Funktionsblock B5 wird ein Temperaturkorrekturwert ermittelt, der sich aus der Kühlmitteltemperatur TCO und der Motoröltemperatur TOIL zusammensetzt. Eine von der Motordrehzahl N und einem Zusatzlastwert ACC_LOAD abhängige Zusatzlast wird in einem Funktionsblock B6 bestimmt. Eine solche Zusatzlast kann beispielsweise der Kompressor einer Klimaanlage eines Kraftfahrzeugs sein.

Abhängig von dem Kraftstoffdruck P im Kraftstoffspeicher 55, der Motordrehzahl N und dem Förderstrom der Hochdruckpumpe MFF_PUMP wird in einem Funktionsblock B7 ein Schätzwert für das Antriebsdrehmoment der Hochdruckpumpe TQ_LOSS_HPP als ein Anteil am Verlustdrehmoment TQ_LOSS ermittelt. Die in den Funktionsblöcken B4 bis B7 ermittelten Werte werden in der Summierstelle S1 aufsummiert. Die Summe bildet das Verlustdrehmoment TQ_LOSS.

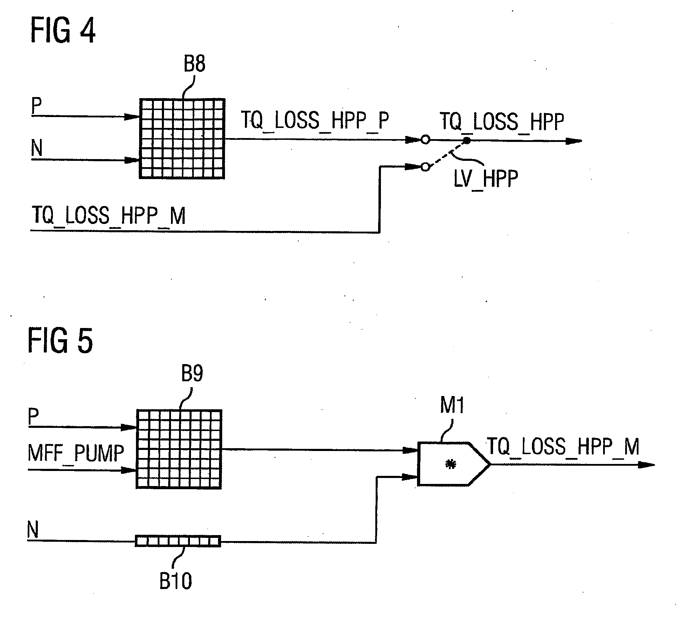

Der in Figur 3 dargestellte Funktionsblock B7 ist in Figur 4 detaillierter dargestellt. Der Schätzwert für das Antriebsdrehmoment der Hochdruckpumpe TQ_LOSS_HPP wird in Abhängigkeit davon ermittelt, ob der Kraftstoffdruck P in dem Kraftstoffspeicher 55 aktuell mittels des Volumenstromsteuerventeils 56 oder des Druckregulators 57 eingestellt wird. Wird der Kraftstoffdruck P über das Volumenstromsteuerventil 56 eingestellt, d.h. über die in den Kraftstoffspeicher 55 geförderte Kraftstoffmenge, wird dies Mengenregelung genannt. Wird alternativ der Kraftstoffdruck P durch gesteuertes Ablassen von Kraftstoff aus dem Kraftstoffspeicher 55 über den Druckregulator 57 eingestellt, so wird dies als Druckregelung bezeichnet. In dem Fall, dass die Einstellung des Kraftstoffdrucks P mittels Druckregelung erfolgt, ist der Schätzwert des Antriebsdrehmoments TQ_LOSS_HPP der Hochdruckpumpe 54 über den Schalter LV_HPP gleich dem Schätzwert für das Antriebsdrehmoment TQ_LOSS_HPP_P der Hochdruckpumpe 54 bei Druckregelung. Der Funktionsblock B8 ermittelt den entsprechenden Schätzwert für das Antriebsdrehmoment TQ_LOSS_HPP_P der Hochdruckpumpe 54 bei Druckregelung aus den Eingangsgrößen Kraftstoffdruck P und Motordrehzahl N. Wird der Kraftstoffdruck P in dem Kraftstoffspeicher 55 dagegen mittels Mengenregelung eingestellt, dann ist der Schätzwert für das Antriebsdrehmoment TQ_LOSS_HPP der Hochdruckpumpe 54 über den Schalter LV_HPP gleich dem Schätzwert für das Antriebsdrehmoment TQ_LOSS_HPP_M der Hochdruckpumpe 54 bei Mengenregelung.

In Figur 5 wird der Schätzwert für das Antriebsdrehmoment TQ_LOSS_HPP_M der Hochdruckpumpe 54 bei Mengenregelung aus den Eingangsgrößen Kraftstoffdruck P, Förderstrom MFF_PUMP der Hochdruckpumpe 54 und Motordrehzahl N bestimmt. Unter dem Förderstrom MFF_PUMP der Hochdruckpumpe 54 wird eine Größe verstanden, die beispielsweise abhängig ist von dem von der Hochdruckpumpe 54 geförderten Kraftstoffvolumen oder von der geförderten Kraftstoffmasse, oder abhängig ist von dem eingespritzten Kraftstoffvolumen oder der eingespritzten Kraftstoffmasse. Ein Funktionsblock B9 ermittelt aus dem Kraftstoffdruck P und dem Förderstrom MFF_PUMP der Hochdruckpumpe 54 einen Schätzwert für das Antriebsdrehmoment der Hochdruckpumpe 54, der in der Multiplizierstelle M1 mit einem drehzahlabhängigen und in einem Funktionsblock B10 bestimmten Korrekturwert multipliziert wird. Durch diesen Korrekturwert können beispielsweise Reibungsverluste in der Hochdruckpumpe 54 berücksichtigt werden, die abhängig sind von der Motordrehzahl N.

Eine bevorzugte Ausführungsform für die Funktionsblöcke B4 bis B6 und B8 bis B10 sind Kennfelder. Diese Kennfelder werden bevorzugt vorab durch Versuche an einem Motorprüfstand, durch Simulationen oder durch Fahrversuche ermittelt. Alternativ können auch beispielsweise auf physikalischen Modellen basierende Funktionen verwendet werden.

Die in der Figur 4 dargestellte Umschaltung mittels Schalter LV_HPP zwischen einem Druckregelbetrieb über den Druckregulator 57 und einem Mengenregelbetrieb über das Volumenstromsteuerventil 56 kann beispielsweise auch ersetzt werden durch eine geeignete Gewichtung der Anteile der Schätzwerte für die Antriebsdrehmomente TQ_LOSS_HPP_P und TQ_LOSS_HPP_M der Hochdruckpumpe 54 bei Druckregelbetrieb und bei Mengenregelbetrieb, wenn der Kraftstoffdruck P im Kraftstoffspeicher 55 sowohl über das Volumenstromsteuerventil 56 als auch über den Druckregulator 57 eingestellt wird.

## Patentansprüche

1. Verfahren zum Steuern einer Brennkraftmaschine mit einer Kraftstoffzuführeinrichtung (5), wobei die Kraftstoffzuführeinrichtung (5) umfasst:
- einen Niederdruckkreis,
- eine Hochdruckpumpe (54), die eingangsseitig gekoppelt ist mit dem Niederdruckkreis und die Kraftstoff in einen Kraftstoffspeicher (55) fördert,
- ein Volumenstromsteuerventil (56), das der Hochdruckpumpe (54) zugeordnet ist,
bei dem
- ein Schätzwert des Antriebsdrehmoments (TQ_LOSS_HPP) der Hochdruckpumpe (54) bestimmt wird in Abhängigkeit von dem Kraftstoffdruckwert (P) in dem Kraftstoffspeicher (55),
- ein Verlustdrehmoment (TQ_LOSS) ermittelt wird abhängig von dem Schätzwert für das Antriebsdrehmoment (TQ_LOSS_HPP) der Hochdruckpumpe (54) und weiteren Verlustdrehmomentanteilen, die abhängig sind von der Motordrehzahl (N) und weiteren Betriebsgrößen,
- ein Solldrehmoment (TQ_REQ) ermittelt wird abhängig von dem Verlustdrehmoment (TQ_LOSS), und
- abhängig von dem Solldrehmoment (TQ_REQ) mindestens ein Stellsignal zum Ansteuern eines Stellglieds der Brennkraftmaschine erzeugt wird.

2. Verfahren nach Anspruch 1,
**dadurch gekennzeichnet, dass**
der Schätzwert des Antriebsdrehmoments (TQ_LOSS_HPP) der Hochdruckpumpe (54) ermittelt wird zusätzlich abhängig von einer den Kraftstoffförderstrom der Hochdruckpumpe charakterisierenden Größe (MFF_PUMP) und der Motordrehzahl (N) der Brennkraftmaschine.

3. Verfahren nach einem der vorstehenden Ansprüche,
**dadurch gekennzeichnet, dass**
zum Einstellen des Kraftstoffdruckwertes (P) in dem Kraftstoffspeicher (55) das Volumenstromsteuerventil (56) und ein Druckregulator (57) vorgesehen sind, und dass der Schätzwert für das Antriebsdrehmoment (TQ_LOSS_HPP) der Hochdruckpumpe (54) abhängig davon ermittelt wird, ob der Kraftstoffdruck wert (P) in dem Kraftstoffspeicher (55) aktuell mittels des Volumenstromsteuerventils (56) und/oder des Druckregulators (57) eingestellt wird.

4. Verfahren nach einem der vorstehenden Ansprüche,
**dadurch gekennzeichnet, dass**
weitere Anteile des Verlustdrehmoments (TQ_LOSS) ermittelt werden aus einem Pump- und Reibungsverlustwert, einem Temperaturkorrekturwert und einem Zusatzlastwert.

## Claims

1. Method for controlling an internal combustion engine with a fuel-supply device (5), whereby the fuel-supply device (5) comprises:
- a low-pressure circuit,
- a high-pressure pump (54) said pump is coupled on the inlet side to the low-pressure circuit and transports fuel to a fuel accumulator (55),
- a control valve for a volumetric flow (56), which is allocated to the high-pressure pump (54),
in which
- an estimated value of the drive torque (TQ_LOSS_HPP) of the high-pressure pump (54) is determined depending on the fuel pressure value (P) in the fuel accumulator (55),
- a loss torque (TQ_LOSS) is determined depending on the estimated value for the drive torque (TQ_LOSS_HPP) of the high-pressure pump (54) and additional loss-torque fractions, which are dependent on an engine speed (N) and additional operating variables,
- a target torque (TQ_REQ) is determined depending on the loss torque (TQ_LOSS), and
- depending on the target torque (TQ_REQ) at least one actuating signal for controlling an actuator of the internal combustion engine is generated from said torque.

2. Method according to claim 1,
**characterized in that**
the estimated value of the drive torque (TQ_LOSS_HPP) of the high-pressure pump (54) is determined in addition depending on a variable (MFF_PUMP) characterizing the fuel feed flow of the high-pressure pump and the engine speed (N) of the internal combustion engine.

3. Method according to one of the preceding claims,
**characterized in that**
for adjusting the fuel pressure value (P) in the fuel accumulator (55), both a control valve for a volumetric flow (56) and a pressure regulator (57) are provided, and that the estimated value for the drive torque (TQ_LOSS_HPP) of the high-pressure pump (54) is determined depending on whether the fuel pressure value (P) in the fuel accumulator (55) is actually adjusted by means of the control valve for a volumetric flow (56) and/or the pressure regulator (57).

4. Method according to one of the preceding claims,
**characterized in that**
additional loss-torque fractions (TQ_LOSS) are determined from a pump and frictional loss value, a temperature correcting value and an additional load value.

## Revendications

1. Procédé pour commander un moteur à combustion interne possédant un dispositif d'alimentation en carburant (5), dans lequel le dispositif d'alimentation en carburant (5) comprend :
- un circuit à basse pression,
- une pompe à haute pression (54) qui est raccordée, côté entrée, au circuit à basse pression et qui refoule le carburant dans un accumulateur de carburant (55),
- une soupape de commande du débit volumique (56) qui est associée à la pompe à haute pression (54),
dans lequel
- une valeur estimée du couple d'entraînement (TQ_LOSS_HPP) de la pompe à haute pression (54) est déterminée en fonction de la valeur (P) de la pression de carburant dans l'accumulateur de carburant (55),
- un couple de perte (TQ_LOSS) est déterminé en fonction de la valeur estimée pour le couple d'entraînement (TQ_LOSS_HPP) de la pompe à haute pression (54) et d'autres composantes du couple de perte qui sont fonction de la vitesse de rotation (N) du moteur et d'autres grandeurs de fonctionnement,
- un couple de consigne (TQ_REQ) est déterminé en fonction du couple de perte (TQ_LOSS), et
- un signal de réglage pour la commande d'un organe de réglage du moteur à combustion interne est produit en fonction du couple de consigne (TQ_REQ).

2. Procédé selon la revendication 1,
**caractérisé en ce que**
la valeur estimée du couple d'entraînement (TQ_LOSS_HPP) de la pompe à haute pression (54) est déterminée en supplément en fonction d'une grandeur (MFF_PUMP) qui caractérise le débit de refoulement de carburant de la pompe à haute pression, et de la vitesse de rotation (N) du moteur à combustion interne.

3. Procédé selon une des revendications précédentes,
**caractérisé en ce que**
pour le réglage de la valeur (P) de la pression de carburant dans l'accumulateur de carburant (55), il est prévu la soupape de commande de débit volumique (56) et un régulateur de pression (57), et **en ce que** la valeur estimée pour le couple d'entraînement (TQ_LOSS_HPP) de la pompe à haute pression (54) est déterminée en fonction du fait que la pression de carburant P dans l'accumulateur de carburant (55), est réglée actuellement au moyen de la soupape (56) de commande du débit volumique, et/ou qu'elle est réglée au moyen du régulateur de pression (57).

4. Procédé selon une des revendications précédentes
**caractérisé en ce que**
d'autres composantes du couple de perte (TQ_LOSS) sont déterminées à partir d'une valeur de perte dans la pompe et de perte par frottement, d'une valeur de correction de la température et d'une valeur de charge additionnelle.
